# EUROPÄISCHE PATENTSCHRIFT

(11) **EP 1 310 707 B1**
(45) Veröffentlichungstag und Bekanntmachung des Hinweises auf die Patenterteilung: **17.03.2004**
(21) Anmeldenummer: 01126839.8
(22) Anmeldetag: 10.11.2001
(51) Int. Cl.: F16H 63/20

(54) **Schaltvorrichtung für ein Wechselgetriebe und Verfahren zur Bewegung und Führung von Schaltgabeln in einem Wechselgetriebe**
Shift device for change speed tranmission and method for moving and guiding of shift forks in a transmission
Dispositif de changement de vitesses et méthode de mouvement et guidage de fourchettes dans une transmission à changement de vitesses

(43) Veröffentlichungstag der Anmeldung: 14.05.2003
(73) Patentinhaber: GETRAG FORD Transmissions GmbH, 50725 Köln (DE)
(72) Erfinder: Röper, Hartmut, Dr., 40789 Monheim (DE); Pflüger, Clemens, 50735 Köln (DE); Lisicki, Wolfgang, 50827 Köln (DE); Müller, Erik, 40597 Düsseldorf (DE)
(74) Vertreter: Bonsmann, Manfred, Dipl.-Ing.

(56) Entgegenhaltungen:
- EP-A- 0 919 748
- DE-A- 4 131 162
- DE-A- 19 816 385
- FR-A- 2 594 926
- US-A- 4 335 623
- US-A- 4 621 537

## Beschreibung

Die Erfindung betrifft eine Schaltvorrichtung für ein Wechselgetriebe, enthaltend
a) mehrere Schaltgabeln, welche verschiebebeweglich auf mindestens einer Führungsstange angeordnet sind und derart in das Wechselgetriebe eingreifen, dass durch ihre Verschiebung das Einlegen der Gänge erfolgt;
b) eine drehbar und verschiebebeweglich gelagerte Schaltwelle, welche so mit den Schaltgabeln gekoppelt ist, dass sich eine Bewegung der Schaltwelle auf eine durch die Ausgangsposition der Schaltwelle ausgewählte Schaltgabel überträgt.

Ferner betrifft die Erfindung ein Verfahren zur Bewegung und Führung von Schaltgabeln in einem Wechselgetriebe der genannten Art.

Eine Schaltvorrichtung für ein Wechselgetriebe, welches in einem Kraftfahrzeug die Einstellung verschiedener Übersetzungsverhältnisse zwischen der Brennkraftmaschine und den Antriebsrädern erlaubt, ist zum Beispiel aus der DE 198 16 385 A1 bekannt. In dem Wechselgetriebe werden die Antriebswelle und die Abtriebswelle wahlweise über Zahnräder verschiedenen Durchmessers gekoppelt, um die gewünschten Gänge einzulegen. Das Ein- und Auslegen eines bestimmten Ganges erfolgt dabei durch die Verschiebung von Schaltmuffen entlang deren Drehachse. Um diese Verschiebung zu bewirken, ist für jede Schaltmuffe eine Schaltgabel vorgesehen, welche verschiebebeweglich auf einer zur Drehachse der Schaltmuffe parallelen Führungsstange angeordnet ist. Eine axiale Verschiebung der entsprechenden Schaltgabel bewirkt somit eine korrespondierende axiale Verschiebung der Schaltmuffe und damit das Ein- oder Auslegen des zugehörigen Ganges, wobei die axiale Verschiebebewegung und die Drehbewegung der Schaltwelle auch eine jeweils vertauschte Wirkung zur Folge haben können.

Die Verschiebung der Schaltgabeln erfolgt gemäß der DE 198 16 385 A1 vermöge eines Schaltfingers, welcher senkrecht abstehend an einer drehbar und axial verschiebebeweglich gelagerten Schaltwelle angeordnet ist. Durch eine axiale Verschiebebewegung der Schaltwelle wird der Schaltfinger jeweils in genau einem Maul eines Mitnehmers positioniert, welcher mit einer der Schaltgabeln verbunden ist. Die axiale Verschiebebewegung der Schaltwelle bewirkt somit die Auswahl der zu betätigenden Schaltgabel und damit der zu schaltenden Gänge. Eine Drehbewegung der Schaltwelle führt zu einer korrespondierenden Drehung des Schaltfingers, wobei dieser diejenige Schaltgabel, in deren Mitnehmer-Maulöffnung er sich gerade befindet, mitbewegt und axial entlang der Führungsstange verschiebt. Die Drehung der Schaltwelle bewirkt somit das Einlegen der mit der zugehörigen Schaltgabel betätigten Gänge.

Die aus der DE 198 16 385 A1 bekannte Schaltvorrichtung, bei der alle Schaltgabeln verschiebebeweglich auf einer fest mit dem Gehäuse des Getriebes verbundenen Führungsstange angeordnet sind, hat den Nachteil einer verhältnismäßig hohen Lagerreibung und damit schlechten Schaltbarkeit. Wenn eine der Schaltgabeln fest mit der Führungsstange verbunden und die Führungsstange verschiebebeweglich im Gehäuse gelagert wird, bewegt sich bei einem Schaltvorgang die Führungsstange zusammen mit der betreffenden Schaltgabel. Da der Lagerabstand der Führungsstange sehr groß gewählt werden kann, ergeben sich geringe Lagerreibungskräfte, was zu einer guten Schaltbarkeit führt. Die restlichen Schaltgabeln müssen allerdings nach wie vor auf der Führungsstange selbst gleiten. Da hier der Stützabstand der Führungslager sehr viel kleiner ist, ist auch die Schaltbarkeit entsprechend schlechter. Um eine optimale Schaltbarkeit zu erreichen, müsste daher jede Schaltgabel auf einer eigenen, verschiebebeweglichen Führungsstange gelagert werden, was sich jedoch aus Kostengründen und aus Platzgründen in der Regel verbietet.

Des Weiteren ist aus der gattungsgemäßen US 4 621 537 eine Schaltvorrichtung bekannt, bei welcher Schaltgabeln verschiebebeweglich auf einer ihrerseits verschiebebeweglich gelagerten Führungsstange angeordnet sind. Eine drehbeweglich und axial verschiebbare Schaltwelle ist mit der Führungsstange so gekoppelt, dass eine Drehung der Schaltwelle in eine axiale Verschiebung der Führungsstange und eine axiale Verschiebung der Schaltwelle in eine Drehung der Führungsstange umgewandelt wird. Ferner sind auf der Führungsstange feststehende Nocken angeordnet, die je nach Drehwinkel der Führungsstange entweder gegen Lagerhülsen der Schaltgabeln stoßen oder in Aussparungen der Lagerhülsen eingreifen können. In der erstgenannten Stellung nehmen die Nocken die entsprechenden Schaltgabeln bei einer axialen Bewegung mit, in der zweitgenannten Position dagegen nicht. Die Drehung der Schaltwelle wird somit zunächst in eine Axialbewegung der Führungsstange umgewandelt, welche dann ihrerseits je nach ihrem (von der Schaltwelle) eingestellten Drehwinkel eine der Schaltgabeln mitnimmt.

Vor diesem Hintergrund war es Aufgabe der vorliegenden Erfindung, eine Schaltvorrichtung und ein Verfahren zur Bewegung von Schaltgabeln in einem Wechselgetriebe bereitzustellen, welche eine kostengünstige und platzsparende Konstruktion erlauben und gleichzeitig eine in allen Gängen gute Schaltbarkeit gewährleisten.

Diese Aufgabe wird durch eine Schaltvorrichtung mit den Merkmalen des Anspruchs 1 sowie durch ein Verfahren mit den Merkmalen des Anspruchs 3 gelöst.

Vorteilhafte Ausgestaltungen sind in den Unteransprüchen enthalten.

Die erfindungsgemäße Schaltvorrichtung eignet sich für ein Wechselgetriebe, welches mehrere (d.h. mindestens zwei) Schaltgabeln enthält, die verschiebebeweglich auf mindestens einer Führungsstange angeordnet sind und derart in die Zahnräder des Wechselgetriebes eingreifen, dass durch die Verschiebung der Schaltgabeln das Einlegen der Gänge des Wechselgetriebes erfolgt. Ferner enthält das Wechselgetriebe eine drehbar und verschiebebeweglich gelagerte Schaltwelle, welche so mit den genannten Schaltgabeln gekoppelt ist, dass die Bewegung (Verschiebung, Drehung etc.) der Schaltwelle in bestimmte Ausgangspositionen zur Auswahl bestimmter Schaltgabeln führt und dass die Bewegung der Schaltwelle ferner auf die durch die genannte Ausgangsposition ausgewählte Schaltgabel übertragen wird. Typischerweise bewirkt dabei eine Bewegungsart - Drehung oder Verschiebung - der Schaltwelle die Auswahl der zu betätigenden Schaltgabel, während durch die andere Bewegungsart die Verschiebung der ausgewählten Schaltgabel erfolgt. Die Schaltvorrichtung ist dadurch gekennzeichnet, dass die Führungsstange verschiebebeweglich gelagert und so mit der Bewegung der Schaltwelle gekoppelt ist, dass sie die Verschiebebewegung der jeweils ausgewählten Schaltgabel (ganz oder teilweise) mitmacht.

Dadurch, dass die Führungsstange die Verschiebebewegung der ausgewählten und betätigten Schaltgabel mitmacht, kommt es zu einer geringeren Relativbewegung zwischen Schaltgabel und Führungsstange. Bei einer völlig synchronen Bewegung von Führungsstange und Schaltgabel tritt sogar überhaupt keine Relativbewegung auf, so dass sich die Führungsstange und die Schaltgabel so verhalten, als wären sie fest miteinander verbunden. Die verringerte oder gänzlich ausgeschaltete Relativbewegung zwischen Führungsstange und Schaltgabel führt zu einer entsprechenden Verringerung beziehungsweise Ausschaltung der Reibungskräfte und einer Verlagerung der Bewegung in die Gehäuselager der Führungsstange. Aufgrund des großen Abstandes dieser Gehäuselager ergeben sich dabei geringere Reibungskräfte, welche der Schaltbarkeit zugute kommen. Im Ergebnis wird somit der Vorteil einer festen Kopplung zwischen einer Schaltgabel und der Führungsstange für alle Schaltgabeln erreicht, ohne dass dazu jede Schaltgabel auf einer eigenen Führungsstange angeordnet werden muss.

Gemäß einer bevorzugten Ausgestaltung der Schaltvorrichtung sind alle Schaltgabeln des Wechselgetriebes auf derselben Führungsstange gelagert. Die Schaltvorrichtung kommt somit mit einer einzigen Führungsstange aus, was entsprechende Kosten- und Platzersparnisse mit sich bringt. Bei Bedarf ist es indes natürlich auch möglich, die Schaltgabeln auf mehrere Führungsstangen zu verteilen und/oder eine Schaltgabel auf mehreren Führungsstangen gleichzeitig zu führen.

Für die Kopplung der Schaltwelle mit der Führungsstange gibt es verschiedene Möglichkeiten. So ist es zum Beispiel denkbar, dass die Führungsstange über einen geeigneten Mechanismus immer gerade mit derjenigen Schaltgabel gekoppelt wird, welche für eine Betätigung durch die Schaltwelle ausgewählt wurde. Die Bewegung der Schaltwelle überträgt sich dann zunächst auf die ausgewählte Schaltgabel und von dieser auf die Führungsstange.

Bevorzugt ist indes eine Ausgestaltung, bei welcher die Führungsstange über einen geeigneten Mechanismus ständig direkt mit der Schaltwelle gekoppelt ist. Das heißt, dass sich die entsprechende Bewegung der Schaltwelle, welche die Führungsstange mitnehmen soll, von der Schaltwelle direkt auf die Führungsstange und davon unabhängig parallel auch direkt auf die Schaltgabeln überträgt.

Ein für die zuletzt genannte Kopplung zwischen Schaltwelle und Führungsstange geeigneter Mechanismus enthält einen Nebenschaltfinger, welcher an der Schaltwelle fest angeordnet ist und in die Maulöffnung eines mit der Führungsstange fest verbundenen Mitnehmers eingreift. Der Nebenschaltfinger kann hierdurch eine Drehbewegung der Schaltwelle in eine lineare Verschiebebewegung der Führungsstange umwandeln. Vorzugsweise bleibt die Verschiebebewegung der Schaltwelle dagegen ohne Auswirkung auf die Führungsstange. Dies kann erreicht werden, wenn sich der ungedrehte Nebenschaltfinger durch die Maulöffnung bewegen kann, ohne an einen Anschlag zu stoßen. Auf diese Weise wird nur die Drehung der Schaltwelle, nicht jedoch deren axiale Verschiebung von dem Nebenschaltfinger auf die Führungsstange übertragen.

Gemäß einer bevorzugten Ausgestaltung der Schaltvorrichtung haben die Schaltgabeln Mitnehmer mit Maulöffnungen, und an der Schaltwelle ist ein Schaltfinger angeordnet, welcher je nach axialer Verschiebeposition der Schaltwelle in genau eine der Maulöffnungen eingreift. Durch das Eingreifen in die Maulöffnung wird eine Drehbewegung der Schaltwelle in eine Verschiebebewegung der zugehörigen Schaltgabel umgewandelt.

Die Erfindung betrifft ferner ein Verfahren zur Bewegung und Führung von Schaltgabeln in einem Wechselgetriebe, wobei Letzteres
a) mehrere Schaltgabeln, welche verschiebebeweglich auf mindestens einer Führungsstange angeordnet sind und derart in das Wechselgetriebe eingreifen, dass durch ihre Verschiebung das Einlegen der Gänge erfolgt, und
b) eine drehbar und verschiebebeweglich gelagerte Schaltwelle, welche so mit den Schaltgabeln gekoppelt ist, dass sich eine Bewegung der Schaltwelle auf eine durch die Ausgangsposition der Schaltwelle ausgewählte Schaltgabel überträgt,
enthält. Das Verfahren weist gemäß Anspruch 3 das Merkmal auf, dass die Führungsstange mit der ausgewählten Schaltgabel ganz oder teilweise mitbewegt wird. Durch diese Mitbewegung kommt es zu einer geringeren Reibung zwischen Schaltgabel und Führungsstange und einer Verlagerung der Bewegung in die vorzugsweise am Gehäuse befindlichen Lager der Führungsstange. Die Schaltbarkeit des Getriebes lässt sich auf diese Weise deutlich verbessern, ohne dass jede Schaltgabel auf einer eigenen Führungsstange gelagert werden müsste.

Vorzugsweise wird die Führungsstange vollständig synchron mit der ausgewählten Schaltgabel mitbewegt, so dass es zu keinerlei Relativbewegung und damit zu keiner Reibung zwischen der Führungsstange und der Schaltgabel kommt.

Gemäß einer anderen bevorzugten Ausgestaltung des Verfahrens werden die Führungsstange und die Schaltgabeln durch eine Drehung der Schaltwelle axial verschoben. Eine Axialverschiebung der Schaltwelle bewirkt dagegen keine Bewegung von Führungsstange und Schaltgabeln, sondern die Auswahl der zu betätigenden Schaltgabel.

Die Erfindung wird nachfolgend anhand der Zeichnungen beispielhaft näher erläutert. Es zeigen:

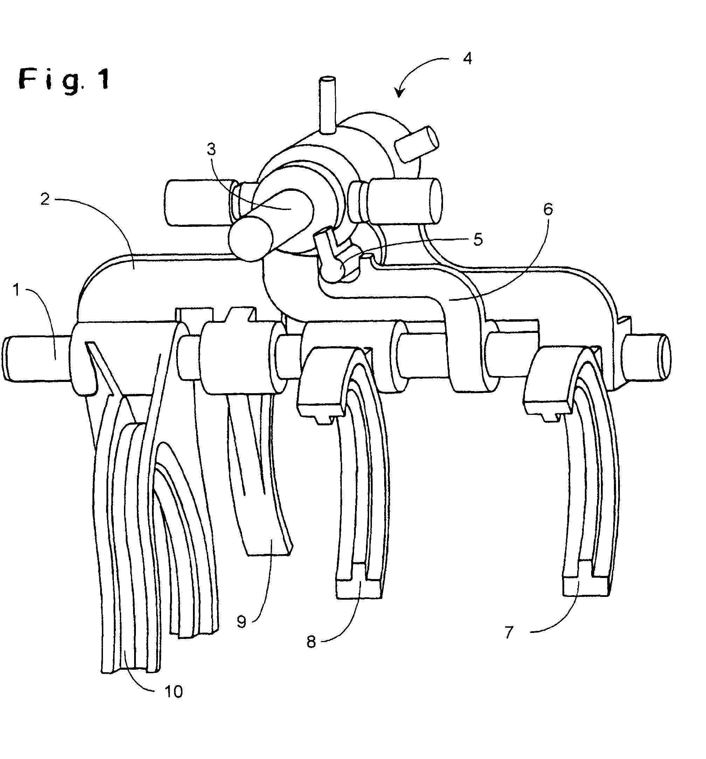

- Fig. 1: eine perspektivische Ansicht der Schaltvorrichtung mit der Schaltwelle und den auf einer Führungsstange angeordneten Schaltgabeln;
- Fig. 2: eine Frontansicht der Schaltvorrichtung nach Figur 1 in der Neutralstellung der Schaltwelle;
- Fig. 3: die Schaltvorrichtung nach Figur 2 in einer gegen den Uhrzeigersinn gedrehten Position der Schaltwelle; und
- Fig. 4: die Schaltvorrichtung nach Figur 2 in einer im Uhrzeigersinn gedrehten Position der Schaltwelle.

Die Figuren zeigen die im Rahmen der vorliegenden Erfindung wichtigen Teile einer Schaltvorrichtung für ein Wechselgetriebe. Nicht dargestellt sind zum Beispiel die Antriebswelle und die Abtriebswelle des Getriebes mit den zugehörigen Zahnrädern. Die diesbezügliche Gestaltung von Wechselgetrieben ist dem Fachmann bekannt und kann zum Beispiel der DE 198 16 385 A1, DE 41 31 162 A1 oder DE 43 35 992 A1 entnommen werden.

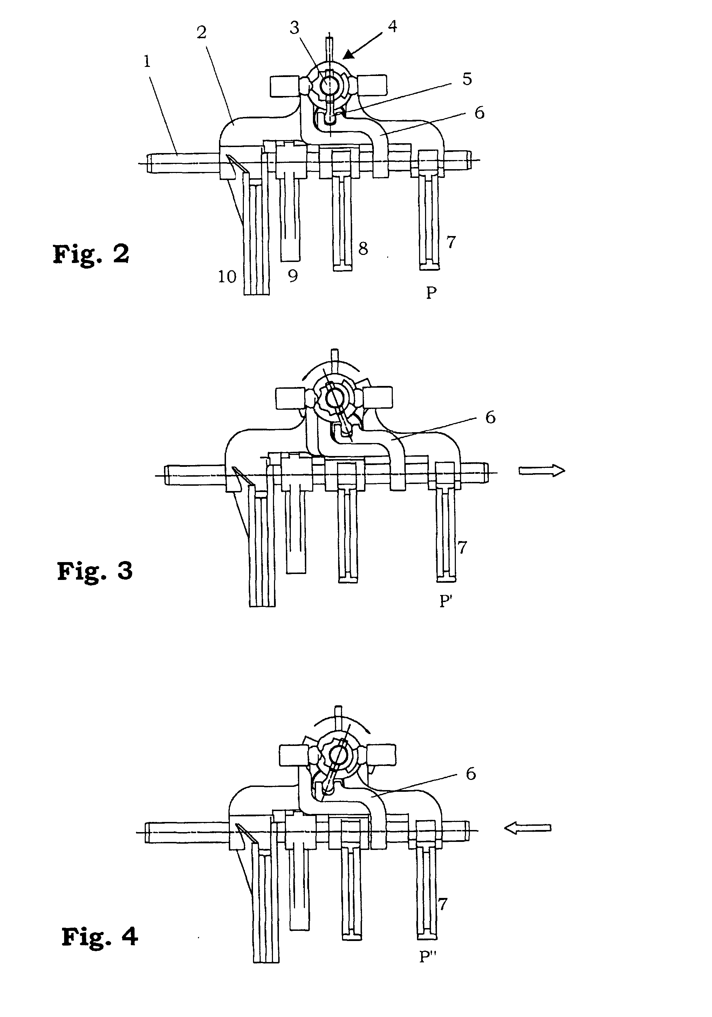

Die Schaltvorrichtung weist im dargestellten Beispiel vier Schaltgabeln 7, 8, 9 und 10 auf, welche zangenartig zwischen Zahnräder beziehungsweise Schaltmuffen greifen und diese durch eine Verschiebung wahlweise zum Eingriff bringen können. Die Schaltgabeln besitzen dabei eine in Figur 2 gezeigte Neutralposition, in welcher die zugehörigen Schaltmuffen keine Zahnräder miteinander in Eingriff bringen und sich das Getriebe somit in Leerlaufstellung befindet.

Die Schaltgabeln 7, 8, 9, 10 sind verschiebebeweglich auf einer Führungsstange 1 angeordnet, so dass sie sich (nur) in Axialrichtung der Führungsstange bewegen lassen. Die Bewegung der Schaltgabeln wird dabei über Mitnehmer 2 von einer Schaltwelle 3, die quer zur Führungsstange 1 verläuft, auf die Schaltgabeln übertragen. Für diese Übertragung greift ein an der Schaltwelle 3 angeordneter (Haupt-)Schaltfinger in Maulöffnungen der Mitnehmer 2 ein, was an sich bekannt in den Figuren nicht im Einzelnen dargestellt ist und ähnlich wie bei dem nachfolgend zu beschreibenden Mechanismus für die Bewegung der Führungsstange 1 erfolgt.

Die bereits erwähnte Schaltwelle 3 ist axial verschiebebeweglich und drehbar gelagert und mit einem vom Fahrer zu betätigenden Schalthebel (nicht dargestellt) gekoppelt. Dieser Schalthebel kann vom Fahrer in einem bekannten H-Muster bewegt werden, wobei vorliegend die Querbewegung in diesem Muster in eine axiale Verschiebebewegung der Schaltwelle 3 und die Vertikalbewegung in dem H-Muster in eine Drehbewegung der Schaltwelle 3 umgewandelt wird. Durch die axiale Verschiebebewegung der Schaltwelle 3 wird der (Haupt-)Schaltfinger in einer der Maulöffnungen des Mitnehmers von einer der Schaltgabeln 7, 8, 9 oder 10 positioniert, wodurch diese Schaltgabel für eine nachfolgende Betätigung ausgewählt wird. Eine Drehung der Schaltwelle 3 führt dann zu einer axialen Verschiebung der ausgewählten Schaltgabel in Richtung der Führungsstange 1.

Während bei bekannten Schaltvorrichtungen die Führungsstange 1 in der Regel fest im Getriebegehäuse gelagert ist, wird sie bei der vorliegenden Erfindung verschiebebeweglich im (nicht dargestellten) Getriebegehäuse gelagert. Ferner ist mit der Führungsstange 1 ein Mitnehmer 6 fest verbunden, welcher ähnlich wie die Mitnehmer 2 der Schaltgabeln zur Schaltwelle 3 verläuft und dort in einer maulartigen Öffnung endet. In diese Maulöffnung des Mitnehmers 6 greift ein an der Schaltwelle 3 fest angeordneter Nebenschaltfinger 5 ein. Über den Nebenschaltfinger 5 wird eine Drehbewegung der Schaltwelle 3 in eine Verschiebebewegung der Führungsstange 1 in ihrer Achsrichtung umgewandelt, wie aus den Figuren 3 und 4 für eine Verschiebung der Führungsstange 1 nach rechts beziehungsweise links erkennbar ist. Synchron mit dieser Verschiebung der Führungsstange 1 erfolgt dabei die Verschiebung der Schaltgabel 7 in die Positionen P' (z.B. 4. Gang) bzw. P'' (z.B. 3. Gang). Der Nebenschaltfinger 5 und die Maulöffnung am Mitnehmer 6 sind so ausgestaltet, dass der Eingriff des Nebenschaltfingers in die Maulöffnung in allen axialen Verschiebepositionen, die die Schaltwelle 3 annehmen kann, erhalten bleibt. Unabhängig davon, welche der Schaltgabeln 7, 8, 9 oder 10 durch die axiale Verschiebung der Schaltwelle 3 ausgewählt wird, wird die Führungsstange 1 daher bei jedem Schaltvorgang zusammen mit der entsprechenden Schaltgabel mitbewegt. Hierdurch wird ein quasi fester Verbund zwischen der Führungsstange 1 und der bewegten Schaltgabel hergestellt, welcher die gleichen geringen Lagerreibungsverluste aufweist, wie sie bei einer mit der Führungsstange permanent fest verbundenen Schaltgabel auftreten. Der Vorteil der erfindungsgemäßen Anordnung ist dabei, dass der "feste Verbund" variabel ist, denn es wird immer nur genau die zum Schalten benötigte Schaltgabel mit der Führungsstange 1 "verbunden". Dies erlaubt es, alle Schaltgabeln 7, 8, 9, 10 auf nur einer einzigen Führungsstange 1 zu lagern, ohne die ansonsten sich dabei ergebenden Nachteile für die Schaltbarkeit in Kauf nehmen zu müssen.

## Patentansprüche

1. Schaltvorrichtung für ein Wechselgetriebe, enthaltend
a) mehrere Schaltgabeln (7, 8, 9, 10), welche verschiebebeweglich auf mindestens einer Führungsstange (1) angeordnet sind und derart in das Wechselgetriebe eingreifen können, dass durch ihre Verschiebung das Einlegen der Gänge erfolgt, und
b) eine drehbar und verschiebebeweglich gelagerte Schaltwelle (3), welche so mit den Schaltgabeln gekoppelt ist, dass sich eine Bewegung der Schaltwelle auf eine durch die Ausgangsposition der Schaltwelle ausgewählte Schaltgabel überträgt,
wobei die Führungsstange (1) verschiebebeweglich gelagert und so mit der Bewegung der Schaltwelle (3) gekoppelt ist, dass sie die Verschiebebewegung der jeweils ausgewählten Schaltgabel (7) zumindest teilweise mitmacht,
**dadurch gekennzeichnet, dass** jede Schaltgabel (7, 8, 9, 10) einen Mitnehmer (2) mit einer Maulöffnung aufweist, wobei ein an der Schaltwelle (3) angeordneter Schaltfinger je nach Verschiebeposition der Schaltwelle in genau eine der Maulöffnungen eingreift, um eine Drehbewegung der Schaltwelle in eine Verschiebebewegung der zugehörigen Schaltgabel umzuwandeln,
und dass ein Nebenschaltfinger (5) an der Schaltwelle (3) angeordnet ist, welcher in die Maulöffnung eines mit der Führungsstange (1) verbundenen Mitnehmers (6) eingreift, um eine Drehbewegung der Schaltwelle in eine Verschiebebewegung der Führungsstange umzuwandeln.

2. Schaltvorrichtung nach Anspruch 1, **dadurch gekennzeichnet, dass** alle Schaltgabeln (7, 8, 9, 10) des Wechselgetriebes auf derselben Führungsstange (1) gelagert sind.

3. Verfahren zur Bewegung und Führung von Schaltgabeln (7, 8, 9, 10) in einem Wechselgetriebe enthaltend
a) mehrere Schaltgabeln (7, 8, 9, 10), welche verschiebebeweglich auf mindestens einer Führungsstange (1) angeordnet sind und derart in das Wechselgetriebe eingreifen, dass durch ihre Verschiebung das Einlegen der Gänge erfolgt, und
b) eine drehbar und verschiebebeweglich gelagerte Schaltwelle (3), welche so mit den Schaltgabeln gekoppelt ist, dass sich eine Bewegung der Schaltwelle auf eine durch die Ausgangsposition der Schaltwelle ausgewählte Schaltgabel überträgt,
wobei die Führungsstange (1) mit der ausgewählten Schaltgabel (7) mitbewegt wird,
**dadurch gekennzeichnet, dass** sich die Bewegung der Schaltwelle (3) ohne Zwischenschaltung der Führungsstange (1) auf die ausgewählte Schaltgabel (7) überträgt.

4. Verfahren nach Anspruch 3, **dadurch gekennzeichnet, dass** die Führungsstange (1) synchron mit der ausgewählten Schaltgabel (7) mitbewegt wird.

5. Verfahren nach Anspruch 3 oder 4, **dadurch gekennzeichnet, dass** die Führungsstange (1) und die Schaltgabel (7, 8, 9, 10) durch eine Drehung der Schaltwelle (3) axial verschoben werden.

## Claims

1. Shift device for change speed transmission containing
a) several shift forks (7, 8, 9, 10) which are arranged in a movable rotating way on a guide rod (1) and can thereby engage in the change speed transmission in such a that through their displacement the engaging of the gears takes place, and
b)a shift shaft (3) mounted in a rotatable and displaceable way which is coupled with the shift forks in such a way that a movement of the shift shaft is transferred onto a shift fork selected through the original position of the shift shaft,
wherein the guide rod (1) is mounted in a displaceable way and is coupled with the movement of the shift shaft (3) in such a way that it participates at least partly in the displacement movement of the respectively selected shift fork (7)
**characterised in that** each shift fork (7, 8, 9, 10) has an accompanying device (2) with an opening wherein a shift finger arranged on the shift shaft (3), depending upon the displacement position of the shift fork, engages in precisely one of the openings in order to convert a rotation movement of the shift shaft into a displacement movement of the associated shift fork,
and that a secondary shift finger (5) is arranged on the shift shaft (3) which engages in the opening of an accompanying device (6) connected to the guide rod (1) in order to convert a rotation movement of the shift shaft into a displacement movement of the guide rod.

2. Shift device according to claim 1 **characterised in that** all shift forks (7, 8, 9, 10) of the change speed transmission are mounted on the same guide rod (1).

3. Method for moving and guiding of shift forks (7, 8, 9, 10) in a change speed transmission containing
a) several shift forks (7, 8, 9, 10) in a change speed transmission containing
a) several shift forks (7, 8, 9, 10) which are arranged in a rotatable way on at least one guide rod (1) and engage in the change speed transmission in such a way that their displacement effects the engagement of the gears, and
b) a shift shaft (3) mounted in such a way that it can be moved and rotated which is coupled with the shift forks in such a way that a movement of the shift shaft is transferred to a shift fork selected through the original position of the shift fork,
wherein the guide rod (1) is moved along with the selected shift fork (7),
**characterised in that** the movement of the shift fork (3) without intermediate shifting of the guide rod (1) is transferred to the selected shift fork (17).

4. Method according to claim 3 **characterised in that** the guide rod (1) is moved along synchronously with the selected shift fork (7).

5. Method according to claim 3 or 4 **characterised in that** the guide rod (1) and the shift fork (7, 8, 9, 10) are axially displaced through a rotation of the shift shaft (3).

## Revendications

1. Dispositif de changement de vitesse pour une boîte de vitesses, comprenant :
a) plusieurs fourchettes de sélection (7, 8, 9, 10), qui sont disposées mobiles en translation sur au moins une tige de guidage (1) et peuvent s'engager dans la boîte de vitesses de telle sorte que leur translation engendre l'enclenchement des rapports, et
b) un arbre de changement de vitesse (3) monté à rotation et mobile en translation, qui est accouplé aux fourchettes de sélection de telle sorte qu'un mouvement de l'arbre de changement de vitesse se transmet sur une fourchette de sélection sélectionnée par la position initiale de l'arbre de changement de vitesse,
la tige de guidage (1) étant montée mobile en translation et accouplée au mouvement de l'arbre de changement de vitesse (3) de telle sorte qu'elle participe au moins pour partie au mouvement de translation de la fourchette de sélection (7) respectivement sélectionnée,
**caractérisé en ce que** chaque fourchette de sélection (7, 8, 9, 10) présente un entraîneur (2) doté d'une ouverture formant mâchoire, un doigt de commande disposé sur l'arbre de changement de vitesse (3) s'engageant chaque fois, selon la position de translation de l'arbre de changement de vitesse, exactement dans une des ouvertures formant mâchoires, afin de transformer un mouvement de rotation de l'arbre de changement de vitesse en un mouvement de translation de la fourchette de sélection correspondante,
et **en ce qu'**un doigt de commande auxiliaire (5) est disposé sur l'arbre de changement de vitesse (3), doigt qui s'engage dans l'ouverture formant mâchoire d'un entraîneur (6) relié à la tige de guidage (1), afin de transformer un mouvement de rotation de l'arbre de changement de vitesse en un mouvement de translation de la tige de guidage.

2. Dispositif de changement de vitesse selon la revendication 1, **caractérisé en ce que** toutes les fourchettes de sélection (7, 8, 9, 10) de la boîte de vitesses sont montées sur la même tige de guidage (1).

3. Procédé de déplacement et de guidage de fourchettes de sélection (7, 8, 9, 10) dans une boîte de vitesses comprenant
a) plusieurs fourchettes de sélection (7, 8, 9, 10), qui sont disposées mobiles en translation sur au moins une tige de guidage (1) et s'engagent dans la boîte de vitesses de telle sorte que leur translation engendre l'enclenchement des rapports, et
b) un arbre de changement de vitesse (3) monté à rotation et mobile en translation, qui est accouplé aux fourchettes de sélection de telle sorte qu'un mouvement de l'arbre de changement de vitesse se transmet sur une fourchette de sélection sélectionnée par la position initiale de l'arbre de changement de vitesse,
la tige de guidage (1) étant déplacée conjointement avec la fourchette de sélection sélectionnée (7),
**caractérisé en ce que** le mouvement de l'arbre de changement de vitesse (3) se transmet sur la fourchette de sélection sélectionnée (7) sans intercalation de la tige de guidage (1).

4. Procédé selon la revendication 3, **caractérisé en ce que** la tige de guidage (1) est conjointement déplacée en synchronisme avec la fourchette de sélection sélectionnée (7).

5. Procédé selon la revendication 3 ou 4, **caractérisé en ce que** la tige de guidage (1) et la fourchette de sélection (7, 8, 9, 10) sont déplacées axialement par une rotation de l'arbre de changement de vitesse (3).
